# EUROPÄISCHE PATENTSCHRIFT

(11) **EP 2 211 122 B1**
(45) Veröffentlichungstag und Bekanntmachung des Hinweises auf die Patenterteilung: **13.07.2011**
(21) Anmeldenummer: 09075045.6
(22) Anmeldetag: 27.01.2009
(51) Int. Cl.: F24J 2/52

(54) **Montagebausatz zum Aufständern von Solarmodulen**
Construction set for placing solar modules on stands
Kit de montage destiné à soutenir des modules solaires

(43) Veröffentlichungstag der Anmeldung: 28.07.2010
(73) Patentinhaber: Mounting Systems GmbH, 15834 Rangsdorf (DE)
(72) Erfinder: Schnitzer, Sandy, 17258 Feldberger Seenlandschaft (DE); Herfurth, Dirk, 14482 Potsdam (DE)
(74) Vertreter: Kietzmann, Manfred

(56) Entgegenhaltungen:
- DE-U1- 8 520 407
- DE-U1-202007 012 570
- DE-U1-202008 001 010
- DE-U1-202008 005 020

## Beschreibung

Die Erfindung betrifft einen Montagebausatz zum Aufständern von Solarmodulen insbesondere auf dem Boden unter Verwendung von Pfosten.

Das derartige Aufständern von Solarmodulen ist insbesondere von Solarmodulfeldern bekannt.

So wird in der DE 20 2005 008 159 U1 eine Vorrichtung zur Aufständerung von Solarmodulen beschrieben, bei der in einer Reihe aufgestellte, im Boden verankerte Pfosten zum Einsatz kommen. Auf jedem Pfosten sind Trägerprofile in Neigungsrichtung der Solarmodulfläche angeordnet. Auf den Trägerprofilen benachbarter Pfosten sind diese verbindende und auf diesen festgelegte Modulträger angeordnet, auf denen die Solarmodule aufliegen und befestigt sind. Dieser Unterbau ist vergleichbar mit einer herkömmlichen Dachkonstruktion aus Dachsparren (hier Trägerprofil) und Dachlatten (hier Modulträger).

Ein derartiges Trägerprofil kann auch noch durch ein am Pfosten angeordnete Strebe, die kopfseitig mit dem Trägerprofil verbunden ist, abgestützt sein. Eine solche Vorrichtung ist aus der DE 20 2008 005 020 U1 bekannt.

Ein ähnlicher Unterbau mit Trägerprofilen und Modulträgern wird bei der DE 10 2005 015 346 A1 verwendet, wobei jeder Längsträger durch zwei Pfosten abgestützt ist.

Mit der DE 20 2005 012 993 U1 wird eine Traganordnung vorgeschlagen, bei der eine Pfostenreihe genutzt wird und jeder Pfosten am Kopf eine Verbindungsplatte aufweist, auf der ein Querträger zwei oder mehr Pfosten überspannend angeordnet ist. Der Querträger weist wiederum Modulträger auf, an denen dann die Solarmodule befestigt sind. Der Modulträger ist dabei ein Spezialträger mit entsprechenden Anschlussmöglichkeiten für Solarmodulrahmen. Im wesentlichen ist diese Konstruktion lediglich eine Umkehrung der Lagen des Unterbaus der vorab bereits genannten Tragvorrichtungen und teilt mit diesen den wesentlichen Nachteil einer Vielzahl unterschiedlichster Montageteile.

Eine Tragkonstruktion unter Verwendung der Konstruktionsteile einer allgemein bekannten Leitplanke wird in der DE 203 03 257 U1 vorgeschlagen. Als einreihig angeordnete Stützpfosten werden Leitplankenpfosten eingesetzt. Die Pfosten werden am Kopf durch eine geneigt angeordnete Leitplanke (Träger) miteinander verbunden und auf der Leitplanke liegen die Solarmodule mit ihrem Rahmen auf und sind befestigt. Die Verbindung Pfosten-Leitplanke wird durch einen Winkelhalter realisiert.

Materialtechnische Erwägungen sind bei dieser Lösung sicher gegenüber der Verfügbarkeit von Leitplanken-KonstruktionsTeilen zurückgestellt worden. Die letztlich aber doch beschränkte Befestigungsmöglichkeit der Solarmodule aufgrund der Leitplankenbreite lässt nur das Aufstellen von kleinen Modulen zu. Bei größeren Windlasten oder auch bei Schneelast wird diese Konstruktion schnell instabil.

Einen Montagebausatz mit den Merkmalen der Präambel des Anspruchs 1 zeigt die DE 20 2008 003 472 U1.

Aufgabe der Erfindung ist es, einen Montagebausatz zum Aufständern von Solarmodulen vorzuschlagen, der materialtechnisch optimiert ist, der auch für größere Solarmodule geeignet ist und der ein hohes Maß an standardisierten und damit vorfertigbaren Bauteilen aufweist.

Gelöst wird diese Aufgabe mit den Merkmalen des Anspruches 1, vorteilhafte Ausgestaltungen sind Gegenstand der Unteransprüche.

In einer vorteilhaften Ausführung sind die Anschlussteile für die Stützstangen bevorzugt Aufnahmehülsen oder Verbindungslaschen.

Als Querträgeraufnahme haben sich solche mit einem H-förmigen Längsquerschnitt bewährt, da sich diese auf der einen Seite mit dem Pfostenkopf bzw. mit den Enden der Stützstangen verbinden lassen und die andere Seite zur Aufnahme des Querträgers nutzbar ist. Bei einer einachsigen Verbindung zwischen Pfosten bzw. Stützstange und Querträgeraufnahme lässt sich auch eine Scharnierwirkung erzielen, was die Montage wesentlich erleichtert.

Ferner sieht eine vorteilhafte Ausführung vor, dass der Profilquerschnitt der Pfosten und der der Stützstangen mindestens ein identisches Querschnittsmaß aufweisen, vorzugsweise sogar identische Profile sind. Auch dadurch reduzieren sich notwendige Verbindungselemente unterschiedlicher Abmaße.

Als Querträger wird bevorzugt ein Kastenprofil eingesetzt, dessen oberer Profilsteg als Anschlussprofil für Solarmodulhalter ausgebildet ist.

Die Querträger werden direkt mit den Solarmodulrahmen verbunden oder unter Verwendung einer weiteren Tragebene aus Modulträgern, die sich dann auf den Querträgern abstützen.

Einzelheiten des Montagebausatzes sind in den Zeichnungen dargestellt. Es zeigen:
- Fig. 1: Pfosten mit Stützstangen und
- Fig. 2: den Querschnitt eines Querträgers.

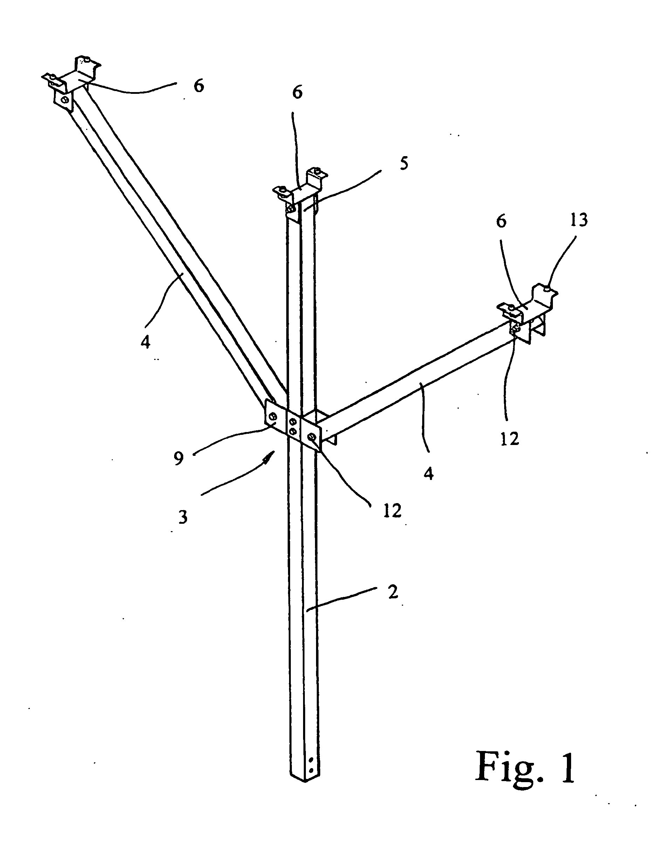

**Fig. 1** zeigt aus dem Montagebausatz zum Aufständern von Solarmodulen Pfosten 2, die in einer Doppelreihe aufstellbar sind, verschiebbar und feststellbar auf den Pfosten 2 in Pfostenlängsachse angeordnete Verbinder 3 für Stützstangen 4 sowie die auf den Pfostenköpfen 5 und auf Enden der Stützstangen 4 aufsetzbaren und mit diesen verbindbaren Querträgeraufnahmen 6.

Die Pfosten 2 und die Stützstangen 4 weisen in dieser vorteilhaften Ausführung einen identischen Vierkant-Querschnitt auf.

Die Verbinder 3 umfassen den Pfostenquerschnitt manschettenartig und weisen nach außen Anschlussteile für die Stützstangen 4 in Form von Verbindungslaschen 9 auf.

Durch die einachsige Verbindung 12 zwischen den Stützstangen 4 und den Verbindungslaschen 9, hier realisiert jeweils durch einen Verbindungsbolzen, wird eine Scharnierwirkung erzielt, was die Montage wesentlich erleichtert.

Neben der gezeigten Anordnung der Stützstangen 4 zur Abstützung des Querträgers 7, der in den Querträgeraufnahmen 6 gelagert wird, können die Stützstangen eines Verbinders 3 auch nach unten weisen und so der Bodenbefestigung des Pfostens 2 dienen oder in Richtung eines gegenüberliegenden oder eines benachbarten Pfostens 2 und so einen tragwerkartigen Aufbau zwischen den Pfosten 2 ermöglichen.

Die Querträgeraufnahme 6 besitzt einen H-förmigen Längsquerschnitt, wobei die oberen Stege der H-förmigen Querträgeraufnahme 6 nach außen um einen Winkel um die 90° abgewinkelt sind. Im abgewinkelten Teil sind Verbindungselemente 13 für die Herstellung einer Verbindung mit dem Querträger 7 angeordnet.

Der innere Abstand der Schenkel der H-förmig ausgebildeten Querträgeraufnahme 6 ist den äußeren Abmaßen der jeweiligen Anschlussteile (Querträger 7, Stützstangen 4, Pfostenkopf 5) angepasst.

Auch hier ist eine einachsige Verbindung 12 zwischen den Pfosten 2 bzw. Stützstangen 4 und den Querträgeraufnahmen 6 mit der dadurch erreichbaren vorteilhaften Scharnierwirkung vorgesehen.

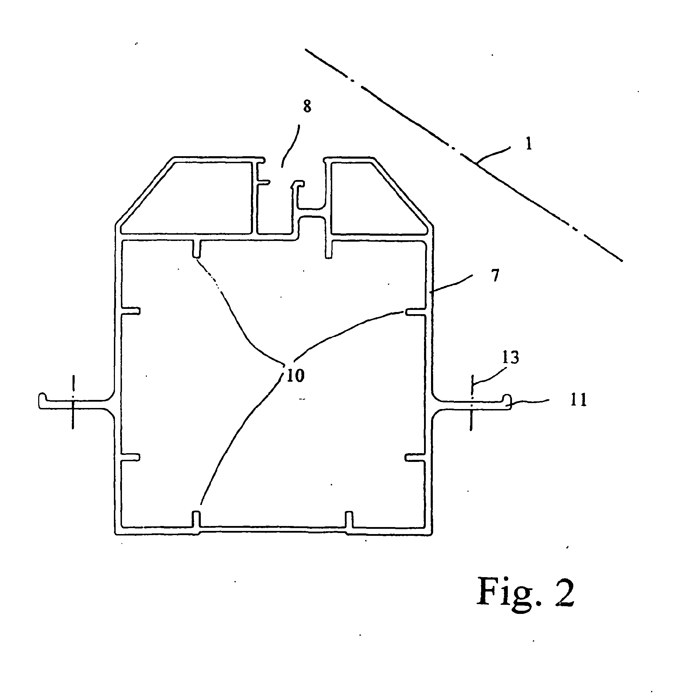

**Fig. 2** zeigt den Profilquerschnitt eines Querträgers 7. Dieser weist ein Kastenprofil auf, dessen oberer Profilsteg als Anschlussprofil 8 für Halter für Modulträger für Solarmodule 1 ausgebildet ist. Ein solches Anschlussprofil 8 ist u. a. aus der EP 1 721 107 B1 bekannt.

Der Querträger 7 besitzt innenwandig Längsstege 10 zur Erhöhung des Widerstandsmomentes, denn der Querträger 7 soll mit einer Länge von 6-8m mindestens zwei Pfosten 2 miteinander verbinden.

Außen ist beidseitig an den Seitenwänden ein Auflage- und Verbindungssteg 11 zum Anschluss an die Querträgeraufnahme 6 mittels der Verbindungselemente 13 angeordnet.

Der vorgeschlagene Montagebausatz zeichnet sich durch eine Beschränkung auf wenige Bauteile aus, die gut händelbar und montagefreundlich strukturiert sind. Alle Verbindungsstellen sind gut zugängig. Durch die einfache Möglichkeit der verschiedensten Verbindungen zwischen Pfosten, Pfosten und Boden und Pfosten und Querträger und damit die optimale Abstützung der Querträger lassen sich große Module sicher und standortunabhängig in der freien Natur montieren.

### Bezugszeichenliste

- 1: Solarmodule
- 2: Pfosten
- 3: Verbinder
- 4: Stützstangen
- 5: Pfostenkopf
- 6: Querträgeraufnahme
- 7: Querträger
- 8: Anschlussprofil des Querträgers 7
- 9: Verbindungslaschen der Verbinder 3
- 10: Längsstege
- 11: Auflage und Verbindungssteg
- 12: einachsige Verbindung
- 13: Verbindungselemente

## Patentansprüche

1. Montagebausatz zum Aufständern von Solarmodulen (1) mit in Doppelreihe aufgestellten Pfosten (2) und jeweils an den Pfosten (2) angeordneten Stützstangen (4), wobei auf den Pfostenköpfen (5) der Pfosten (2) und Stützstangenenden dieser Pfosten (2) jeweils einer Pfostenreihe ein Querträger (7) in Querträgeraufnahmen (6) abgestützt ist, wobei jeder Pfosten (2) Verbinder (3) aufweist, die den Pfostenquerschnitt umfassen, wobei die Verbinder (3) nach außen weisende Anschlussteile für die Stützstangen (4) aufweisen, und die sich in den am gegenüberliegenden Ende der Stützstangen (4) und auf den Pfostenköpfen (5) in den Querträgeraufnahmen (6) abstützenden Querträger (7) jeder Pfostenreihe mindestens zwei Pfosten (2) überspannen, wobei die Querträger (7) oben und/oder seitlich Anschlüsse für die sich jeweils auf einem Querträger (7) jeder Pfostenreihe abstützenden Solarmodule (1) der Modulträger aufweisen, **dadurch gekennzeichnet, dass** die Verbinder in der Pfostenlängsachse verschieb-und feststellbar sind und den Pfostenquerschnitt manschettenartig umfassen.

2. Montagebausatz nach Anspruch 1, **dadurch gekennzeichnet, dass**
der Profilquerschnitt der Pfosten (2) und der Stützstangen (4) mindestens ein identisches Querschnittsmaß aufweisen, vorzugsweise identische Profile sind.

3. Montagebausatz nach Anspruch 1 oder 2, **dadurch gekennzeichnet, dass**
die Pfosten (2) einen Vierkant-Querschnitt aufweisen.

4. Montagebausatz nach einem der Ansprüche 1 bis 3, **dadurch gekennzeichnet, dass**
die Anschlussteile für die Stützstangen (4) Aufnahmehülsen oder Verbindungslaschen (9) sind.

5. Montagebausatz nach einem der Ansprüche 1 bis 4, **dadurch gekennzeichnet, dass**
die Querträgeraufnahme (6) einen H-förmigen Längsquerschnitt aufweist.

6. Montagebausatz nach Anspruch 5, **dadurch gekennzeichnet, dass**
die oberen Stege der H-förmigen Querträgeraufnahme (6) nach außen um einen Winkel um die 90° abgewinkelt sind.

7. Montagebausatz nach Anspruch 5 oder 6, **dadurch**
**gekennzeichnet, dass**
der innere Abstand der Schenkel der H-förmig ausgebildeten Trägeraufnahme (6) den äußeren Abmaßen der jeweiligen Anschlussteile: Querträger (7), Stützstangen (4) angepasst ist.

8. Montagebausatz nach einem der Ansprüche 1 bis 7, **dadurch gekennzeichnet, dass**
der Querträger (7) ein Kastenprofil aufweist, das innenwandig Längsstege (10) zur Erhöhung des Widerstandsmomentes aufweist.

9. Montagebausatz nach einem der Ansprüche 1 bis 8, **dadurch gekennzeichnet, dass**
der Querträger (7) außen beidseitig an den Seitenwänden einen Auflage- und Verbindungssteg (11) zum Anschluss an die Querträgeraufnahme (6) besitzt.

10. Montagebausatz nach einem der Ansprüche 1 bis 9, **dadurch gekennzeichnet, dass**
Stützstangen (4) eines Verbinders (3) bei nicht aufgesetzten Querträgeraufnahmen nach unten oder zur Seite weisend angeordnet sind und so der Bodenbefestigung des Pfostens (2) dienen oder in Richtung eines gegenüberliegenden oder eines benachbarten Pfostens (2) und so einen tragwerkartigen Aufbau zwischen den Pfosten (2) ermöglichen.

11. Montagebausatz nach einem der Ansprüche 1 bis 10, **dadurch gekennzeichnet, dass** die Verbindung zwischen Pfosten (2) bzw.
Stützstange (4) und Querträgeraufnahme und/oder zwischen Verbinder (3) und Stützstange (4) eine einachsige Verbindung (12) mit Scharnierwirkung ist.

## Claims

1. An assembly kit for mounting solar modules (1) on stays with stays (2) put up in a double row and with supporting rods (4) arranged on each stay (2), wherein a transverse girder (7) is supported in transverse-girder retainers (6) on the stay heads (5) of the stays (2) and the supporting-rod ends of said stays (2) of one row of stays each, wherein
each stay (2) has connectors (3) that enclose the cross-section of the stay, wherein the connectors (3) have outwardly directed connecting pieces for the supporting rods (4), and the transverse girders (7) of each row of stays span at least two stays (2), said transverse girders (7) being supported at the opposite end of the supporting rods (4) and on the stay heads (5) in the transverse-girder retainers (6), wherein the transverse girders (7) have, at theirs tops and/or sides, connectors for the solar modules (1) or module carriers each supported on a transverse girder (7) of each row of stays, **characterized in that**
the connectors are movable and lockable along the longitudinal axis of the stay and enclose the cross-section of the stay like a sleeve.

2. An assembly kit according to claim 1, **characterized in that**
the profile cross-section of the stays (2) and the profile cross-section of the supporting rods (4) have at least an identical dimension of cross-section and, preferably, are identical profiles.

3. An assembly kit according to claim 1 or 2, **characterized in that**
the stays (2) have a square cross-section.

4. An assembly kit according to any one of claims 1 to 3, **characterized in that**
the connecting pieces for the supporting rods (4) are locating sleeves or connecting straps (9).

5. An assembly kit according to any one of claims 1 to 4, **characterized in that**
the transverse-girder retainer (6) has an H-shaped longitudinal cross-section.

6. An assembly kit according to claim 5, **characterized in that**
the upper webs of the H-shaped transverse-girder retainer (6) are outwardly angled at an angle of around 90°.

7. An assembly kit according to claim 5 or 6, **characterized in that**
the inner distance between the legs of the H-shaped girder retainer (6) is adapted to the outer dimensions of the respective connecting pieces, i.e. transverse girders (7), supporting rods (4).

8. An assembly kit according to any one of claims 1 to 7, **characterized in that**
the transverse girder (7) has a box section that has, on its inner walls, longitudinal webs (10) for increasing the section modulus.

9. An assembly kit according to any one of claims 1 to 8, **characterized in that**
the transverse girder (7) has a supporting and connecting web (11) on both outer side walls, said web (11) serving to establish a connection to the transverse-girder retainer (6).

10. An assembly kit according to any one of claims 1 to 9, **characterized in that**
supporting rods (4) of a connector (3), when the transverse-girder retainers are not placed on them, are directed downwardly or laterally, thereby serving to fix the stay (2) in the ground, or are directed towards an opposite or an adjacent stay (2), thereby allowing a construction in the form of a supporting framework between the stays (2).

11. An assembly kit according to any one of claims 1 to 10, **characterized in that**
the connection between the stay (2) or the supporting rod (4) and the transverse-girder retainer and/or between the connector (3) and the supporting rod (4) is a single-axle connection (12) that functions as a hinge.

## Revendications

1. Kit de montage pour dresser des modules solaires (1) avec des montants (2) installés en double rangée et des barres d'appui (4) disposées respectivement sur les montants (2), une traverse (7) étant supportée dans des logements de traverse (6) sur les têtes de montant (5) des montants (2) et sur les extrémités de barres d'appui de ces montants (2) de chaque rangée de montants,
chaque montant (2) présentant des éléments de raccordement (3) qui entourent la section transversale de montant, les éléments de raccordement (3) présentant des pièces de rattachement dirigées vers l'extérieur pour les barres d'appui (4), et les traverses (7) de chaque rangée de montants qui s'appuient dans les logements de traverse (6) à l'extrémité opposée des barres d'appui (4) et dans les logements de traverse (6) sur les têtes de montant (5) enjambant au moins deux montants (2), les traverses (7) présentant, en haut et/ou latéralement, des rattachements pour les modules solaires (1) ou supports de module s'appuyant respectivement sur une traverse (7) de chaque rangée de montants,
**caractérisé en ce que**
les éléments de raccordement peuvent être déplacés et fixés dans l'axe longitudinal de montant et entourent la section transversale de montant à la façon d'une manchette.

2. Kit de montage selon la revendication 1, **caractérisé en ce que**
la section transversale profilée des montants (2) et celle des barres d'appui (4) présentent une dimension de section transversale identique, et sont de préférence des profilés identiques.

3. Kit de montage selon la revendication 1 ou 2, **caractérisé en ce que**
les montants (2) présentent une section transversale carrée.

4. Kit de montage selon une des revendications 1 à 3, **caractérisé en ce que**
les pièces de rattachement pour les barres d'appui (4) sont des manchons de réception ou des attaches de raccordement (9).

5. Kit de montage selon une des revendications 1 à 4, **caractérisé en ce que**
le logement de traverse (6) présente une section transversale longitudinale en forme de H.

6. Kit de montage selon la revendication 5, **caractérisé en ce que**
les nervures supérieures du logement de traverse (6) en forme de H sont coudées vers l'extérieur selon un angle autour de 90°

7. Kit de montage selon la revendication 5 ou 6, **caractérisé en ce que**
la distance intérieure des branches du logement de traverse (6) constitué en forme de H est adaptée aux dimensions extérieures des pièces de rattachement respectives : traverses (7), barres d'appui (4).

8. Kit de montage selon une des revendications 1 à 7, **caractérisé en ce que** la traverse (7) présente un profil en caisson qui présente, côté paroi intérieure, des nervures longitudinales (10) pour augmenter le moment résistant.

9. Kit de montage selon une des revendications 1 à 8, **caractérisé en ce que**
la traverse (7) possède, extérieurement des deux côtés sur les parois latérales, une nervure d'appui et de raccordement (11) pour le rattachement au logement de traverse (6).

10. Kit de montage selon une des revendications 1 à 9, **caractérisé en ce que**,
en l'absence de mise en place de logements de traverse, des barres d'appui (4) d'un élément de raccordement (3) sont disposées orientées vers le bas ou vers le côté, et servent ainsi à la fixation au sol du montant (2), ou sont disposées en direction d'un montant (2) opposé ou voisin et permettent ainsi entre les montants (2) une structure à la façon d'un appareil porteur.

11. Kit de montage selon une des revendications 1 à 10, **caractérisé en ce que**
le raccordement entre des montants (2) ou une barre d'appui (4) et un logement de traverse et/ou entre un élément de raccordement (3) et une barre d'appui (4) est un raccordement à axe unique (12) avec un effet de charnière.
